(19) Europäisches Patentamt
European Patent Office
Office européen des brevets

(11) EP 4 414 423 A1

(12) **EUROPEAN PATENT APPLICATION**
published in accordance with Art. 153(4) EPC

(43) Date of publication:
**14.08.2024 Bulletin 2024/33**

(21) Application number: **22878205.8**

(22) Date of filing: **18.08.2022**

(51) International Patent Classification (IPC):
***C08L 79/08*** *(2006.01)* ***C08G 73/10*** *(2006.01)*
***C08L 81/06*** *(2006.01)*

(52) Cooperative Patent Classification (CPC):
**C08G 73/10; C08L 79/08; C08L 81/06**

(86) International application number:
**PCT/JP2022/031146**

(87) International publication number:
**WO 2023/058334 (13.04.2023 Gazette 2023/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.10.2021 JP 2021164314**

(71) Applicant: **MITSUBISHI GAS CHEMICAL COMPANY, INC.**
**Chiyoda-ku**
**Tokyo 100-8324 (JP)**

(72) Inventors:
- **SAKAI, Atsushi**
  **Hiratsuka-shi, Kanagawa 254-0016 (JP)**
- **SATO, Yuuki**
  **Hiratsuka-shi, Kanagawa 254-0016 (JP)**
- **FUKUSHIMA, Takuya**
  **Hiratsuka-shi, Kanagawa 254-0016 (JP)**

(74) Representative: **Vossius & Partner**
**Patentanwälte Rechtsanwälte mbB**
**Siebertstrasse 3**
**81675 München (DE)**

# (54) POLYIMIDE RESIN COMPOSITION AND MOLDED BODY

(57) A polyimide resin composition containing a polyimide resin (A) and an amorphous resin (B), wherein the polyimide resin (A) contains a repeating structural unit represented by the following formula (1) and a repeating structural unit represented by the following formula (2), a content ratio of the repeating structural unit of the formula (1) with respect to the total of the repeating structural unit of the formula (1) and the repeating structural unit of the formula (2) is 20 to 70 mol%, and the amorphous resin (B) comprises a repeating structural unit represented by a predetermined formula (I), and a molded article containing the same:

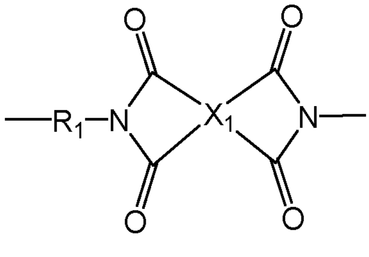

(1)

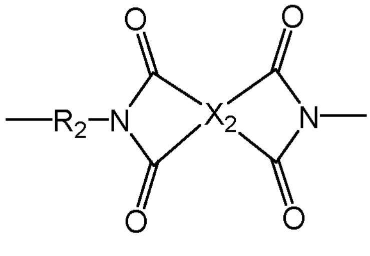

(2)

wherein $R_1$ represents a divalent group having from 6 to 22 carbon atoms containing at least one alicyclic hydrocarbon structure; $R_2$ represents a divalent chain aliphatic group having from 5 to 16 carbon atoms; and $X_1$ and $X_2$ each independently represent a tetravalent group having from 6 to 22 carbon atoms containing at least one aromatic ring.

EP 4 414 423 A1

## Description

### Technical Field

The present invention relates to a polyimide resin composition and a molded article.

### Background Art

A polyimide resin is a useful engineering plastic that has high thermal stability, high strength and high solvent resistance due to the stiffness, resonance stabilization and strong chemical bonds of the molecular chain thereof, and is being applied to a wide range of fields. A polyimide resin having crystallinity can be further enhanced in the heat resistance, the strength and the chemical resistance thereof, and thus is expected for applications as alternatives of metals or the like. While a polyimide resin has high heat resistance, however, it has the problems of exhibiting no thermoplasticity and having low molding processability.

Vespel (registered trademark), a highly heat-resistant resin, is known as a polyimide molding material (PTL 1). This resin is difficult to process by molding due to its very low flowability even at a high temperature, and is also disadvantageous in terms of cost because it requires molding under conditions of a high temperature and a high pressure for a prolonged period of time. In contrast to this, a resin having a melting point and flowability at a high temperature, such as a crystalline resin, may be processed by molding easily and inexpensively.

Thus, a polyimide resin having thermoplasticity has been reported in recent years. Such a thermoplastic polyimide resin is excellent in molding processability in addition to the original heat resistance of the polyimide resin. The thermoplastic polyimide resin is therefore applicable to a formed article for use in an inhospitable environment to which nylon or polyester, a general purpose thermoplastic resin, is inapplicable.

For example, Patent Literature 2 discloses a thermoplastic polyimide resin containing a predetermined repeating structural unit obtained by reacting a tetracarboxylic acid containing at least one aromatic ring and/or derivative thereof, a diamine containing at least one alicyclic hydrocarbon structure, and a chain aliphatic diamine.

In the engineering plastics field, a technique of compounding and alloying two or more thermoplastic resins is also known for the purpose of improving physical properties, imparting functions according to the application, and the like. Patent Literature 3 discloses a thermoplastic polyimide resin containing a predetermined repeating unit, and also describes that this polyimide resin is used as a polymer alloy in combination with other resins.

### Citation List

### Patent Literature

PTL 1: JP 2005-28524 A
PTL 2: WO 2013/118704
PTL 3: WO 2016/147996

### Summary of Invention

### Technical Problem

The thermoplastic polyimide resin described in Patent Literature 3 is crystalline, and has excellent heat resistance, strength, chemical resistance, and the like, but depending on the application, a high level of dimensional stability over a wide temperature range is required, and there is room for further improvement in this respect.

An object of the present invention is to provide a polyimide resin composition capable of producing a molded article having a low coefficient of linear thermal expansion and excellent dimensional stability.

### Solution to Problem

The present inventors have found that the aforementioned object can be attained by polyimide resin composition containing a crystalline thermoplastic polyimide resin that is combined with a particular different polyimide structural unit in a particular ratio and an amorphous resin having a particular structure.

That is, the present invention relates to the following.

[1] A polyimide resin composition containing a polyimide resin (A) and an amorphous resin (B), wherein the polyimide resin (A) contains a repeating structural unit represented by the following formula (1) and a repeating structural unit represented by the following formula (2), a content ratio of the repeating structural unit of the formula (1) with respect to the total of the repeating structural unit of the formula (1) and the repeating structural unit of the formula (2) is 20 to 70 mol%, and the amorphous resin (B) comprises a repeating structural unit represented by the following formula (I),

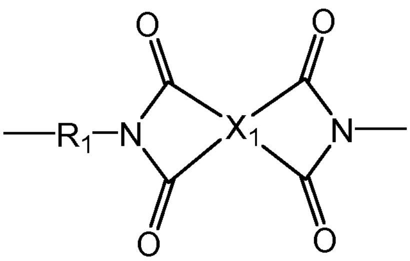

(1)

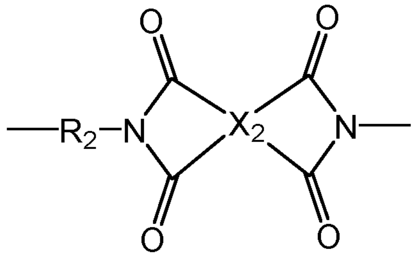

(2)

wherein $R_1$ represents a divalent group having from 6 to 22 carbon atoms containing at least one alicyclic hydrocarbon structure; $R_2$ represents a divalent chain aliphatic group having from 5 to 16 carbon atoms; and $X_1$ and $X_2$ each independently represent a tetravalent group having from 6 to 22 carbon atoms containing at least one aromatic ring, and

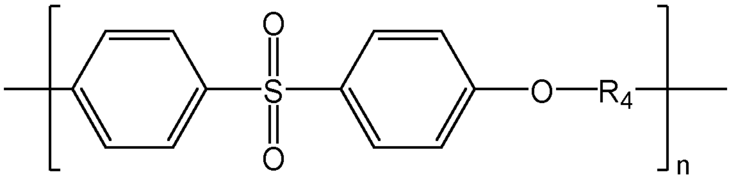

(I)

wherein $R_4$ represents a single bond or a divalent group having from 6 to 22 carbon atoms containing at least one aromatic ring; and n is the number of repeating structural units, and is a number exceeding 1.

[2] A molded article containing the polyimide resin composition according to the above [1].

Advantageous Effects of Invention

The polyimide resin composition and molded article of the present invention have a low coefficient of linear thermal expansion and excellent dimensional stability, and therefore are suitable for, for example, films, copper clad laminates and electrical and electronic members requiring a low coefficient of linear thermal expansion.

Brief Description of Drawings

[Fig. 1] Fig. 1 is a schematic diagram showing a production method of a sample used in observation by a field-emission scanning electron microscope (FE-SEM).

[Fig. 2] Fig. 2 is a micrograph of when a cross-section cut perpendicular to the machine direction (MD) of the polyimide resin composition (pellets) of Example 2 is observed by a FE-SEM.

[Fig. 3] Fig. 3 is a micrograph of when a cross-section cut perpendicular to the machine direction (MD) of the polyimide resin composition (pellets) of Example 3 is observed by a FE-SEM.

[Fig. 4] Fig. 4 is a micrograph of when a cross-section cut perpendicular to the machine direction (MD) of the polyimide resin composition (pellets) of Example 5 is observed by a FE-SEM.

Description of Embodiments

[Polyimide resin composition]

The polyimide resin composition according to the present invention contains a polyimide resin (A) and an

amorphous resin (B). The polyimide resin (A) contains a repeating structural unit represented by the following formula (1) and a repeating structural unit represented by the following formula (2). A content ratio of the repeating structural unit of the formula (1) with respect to the total of the repeating structural unit of the formula (1) and the repeating structural unit of the formula (2) is 20 to 70 mol%. The amorphous resin (B) comprises a repeating structural unit represented by the following formula (I).

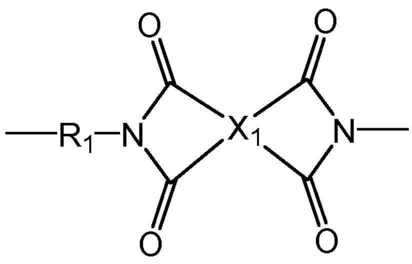

(1)

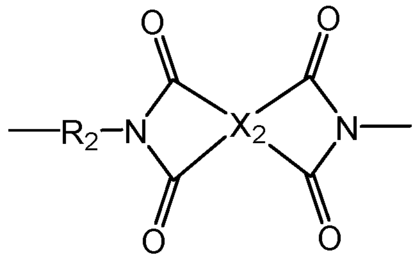

(2)

$R_1$ represents a divalent group having from 6 to 22 carbon atoms containing at least one alicyclic hydrocarbon structure; $R_2$ represents a divalent chain aliphatic group having from 5 to 16 carbon atoms; and $X_1$ and $X_2$ each independently represent a tetravalent group having from 6 to 22 carbon atoms containing at least one aromatic ring.

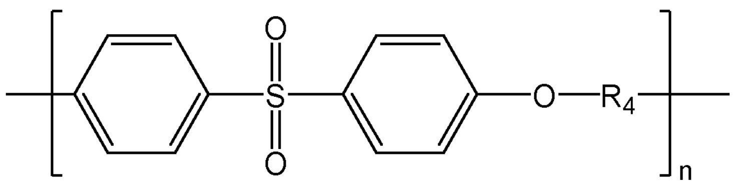

(I)

$R_4$ represents a single bond or a divalent group having from 6 to 22 carbon atoms containing at least one aromatic ring; and n is the number of repeating structural units, and is a number exceeding 1.

As a result of having the above structure, the polyimide resin composition of the present invention is a polyimide resin composition capable of producing a molded article having a low coefficient of linear thermal expansion (hereinafter also referred to as "CTE") and excellent dimensional stability. Although the reason for this is not certain, it is thought to be as follows.

The component (A) is a crystalline resin, a component (B) is an amorphous resin, and the component (B) has a sulfonyl group, which is a polar group. Therefore, although it is difficult for the component (A) and the component (B) to mix wholly together even when melt-kneaded, because of their high dispersibility in each other, it is thought that the component (A) and the component (B) are mutually dispersed at the micro to nano level in the resulting resin composition and molded article, forming a microphase-separated structure such as a sea-island structure. A molded article in which the component (A) or component (B) is finely dispersed at a micro to nano level tends to disperse stress even when stress is applied, and so it is thought that stress relaxation tends to occur when shrinkage stress occurs due to heating. Further, since the component (A) and the component (B) are resins having a relatively high heat resistance among thermoplastic resins, it is thought that higher dimensional stability can be maintained even in a high temperature range.

The molded article obtained by molding the polyimide resin composition of the present invention preferably has a microphase-separated structure from the viewpoint of achieving a lower CTE. The microphase-separated structure is formed by phase separation of the component (A) and the component (B), and may be a sea-island structure or a co-continuous structure, but is preferably a sea-island structure.

In the sea-island structure, depending on the mass ratio between the component (A) and the component (B) in the molded article, either of the components may form the "sea".

In the present specification, whether a molded article has a microphase-separated structure can be determined by observing the surface or a cross section of the molded article with a scanning electron microscope (SEM).

Alternatively, the molded article may be determined to have a microphase-separated structure if, when the exothermic amount of crystallization of the component (A) alone is taken to be $\Delta Hm_0$, and the exothermic amount of crystallization of the molded article is taken to be $\Delta Hm$, the value of $\Delta Hm \times$(mass proportion of the component (A) in the molded article) is a value close to $\Delta Hm$, specifically, if $[\Delta Hm - \{\Delta Hm_0 \times (\text{component (A) mass proportion})\}]/\Delta Hm \times 100$ is within $\pm 30\%$. The exothermic amount of crystallization can be specifically measured by the method described in the examples.

<Polyimide resin (A)>

The polyimide resin (A) used in the present invention contains a repeating structural unit represented by the following formula (1) and a repeating structural unit represented by the following formula (2), a content ratio of the repeating structural unit of the formula (1) with respect to the total of the repeating structural unit of the formula (1) and the repeating structural unit of the formula (2) being 20 to 70 mol%:

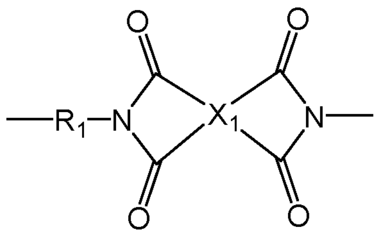

(1)

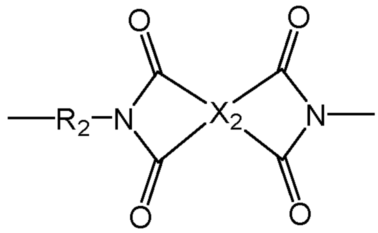

(2)

wherein $R_1$ represents a divalent group having from 6 to 22 carbon atoms containing at least one alicyclic hydrocarbon structure; $R_2$ represents a divalent chain aliphatic group having from 5 to 16 carbon atoms; and $X_1$ and $X_2$ each independently represent a tetravalent group having from 6 to 22 carbon atoms containing at least one aromatic ring.

The polyimide resin (A) used in the present invention is a crystalline thermoplastic resin, which is preferably in a powder or pellet form. Thermoplastic polyimide resins are distinguished from, for example, polyimide resins formed by closing the imide ring after shaping in a state of a polyimide precursor such as a polyamic acid and having no glass transition temperature (Tg), or polyimide resins that decompose at a temperature lower than the glass transition temperature.

The repeating structural unit of formula (1) will be described in detail below.

$R_1$ represents a divalent group having from 6 to 22 carbon atoms containing at least one alicyclic hydrocarbon structure. The alicyclic hydrocarbon structure herein means a ring derived from an alicyclic hydrocarbon compound, and the alicyclic hydrocarbon compound may be either saturated or unsaturated and may be either monocyclic or polycyclic.

Examples of the alicyclic hydrocarbon structure include a cycloalkane ring, such as a cyclohexane ring, a cycloalkene ring, such as cyclohexene, a bicycloalkane ring, such as a norbornane ring, and a bicycloalkene ring, such as norbornene, but the alicyclic hydrocarbon structure is not limited thereto. Among these, a cycloalkane ring is preferred, a cycloalkane ring having from 4 to 7 carbon atoms is more preferred, and a cyclohexane ring is further preferred.

$R_1$ has from 6 to 22 carbon atoms, and preferably from 8 to 17 carbon atoms.

$R_1$ contains at least one alicyclic hydrocarbon structure, and preferably from 1 to 3 alicyclic hydrocarbon structures.

$R_1$ is preferably a divalent group represented by the following formula (R1-1) or (R1-2):

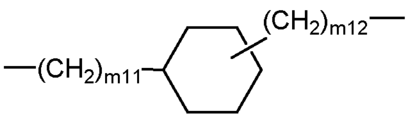

(R1-1)

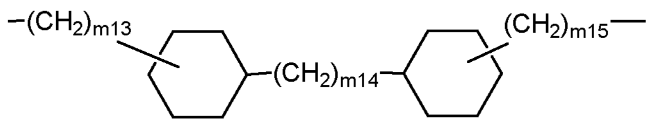

(R1-2)

wherein $m_{11}$ and $m_{12}$ each independently represent an integer of 0-2, and preferably 0 or 1; and $m_{13}$ to $m_{15}$ each independently represent an integer of 0-2, and preferably 0 or 1.

$R_1$ is particularly preferably a divalent group represented by the following formula (R1-3):

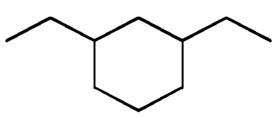

(R1-3)

In the divalent group represented by the formula (R1-3), the conformation of the two methylene groups with respect to the cyclohexane ring may be either cis or trans, and the ratio of cis and trans may be an arbitrary value.

$X_1$ is a tetravalent group having from 6 to 22 carbon atoms containing at least one aromatic ring. The aromatic ring may be either a monocyclic ring or a condensed ring, and examples thereof include a benzene ring, a naphthalene ring, an anthracene ring and a tetracene ring, but the aromatic ring is not limited thereto. Among these, a benzene ring and a naphthalene ring are preferred, and a benzene ring is more preferred.

$X_1$ has from 6 to 22 carbon atoms, and preferably has from 6 to 18 carbon atoms.

$X_1$ contains at least one aromatic ring, and preferably contains from 1 to 3 aromatic rings.

$X_1$ is preferably a tetravalent group represented by one of the following formulae (X-1) to (X-4):

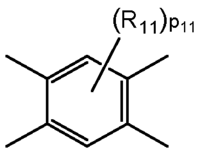

(X-1)

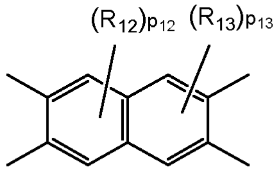

(X-2)

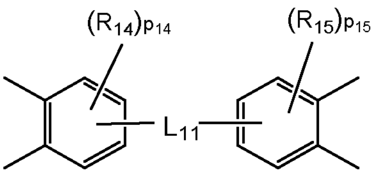

(X-3)

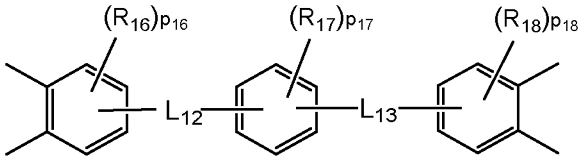

(X-4)

wherein $R_{11}$ to $R_{18}$ each independently represent an alkyl group having from 1 to 4 carbon atoms; $p_{11}$ to $p_{13}$ each independently represent an integer of 0-2, and preferably 0; $p_{14}$, $p_{15}$, $p_{16}$ and $p_{18}$ each independently represent an integer of 0-3, and preferably 0; $p_{17}$ represents an integer of 0-4, and preferably 0; and $L_{11}$ to $L_{13}$ each independently represent a single bond, a carbonyl group or an alkylene group having from 1 to 4 carbon atoms.

$X_1$ is a tetravalent group having from 6 to 22 carbon atoms containing at least one aromatic ring, and therefore $R_{12}$, $R_{13}$, $p_{12}$ and $p_{13}$ in the formula (X-2) are selected in such a manner that the tetravalent group represented by the formula (X-2) has from 10 to 22 carbon atoms.

Similarly, $L_{11}$, $R_{14}$, $R_{15}$, $p_{14}$ and $p_{15}$ in the formula (X-3) are selected in such a manner that the tetravalent group represented by the formula (X-3) has from 12 to 22 carbon atoms, and $L_{12}$, $L_{13}$, $R_{16}$, $R_{17}$, $R_{18}$, $p_{16}$, $p_{17}$ and $p_{18}$ in the formula (X-4) are selected in such a manner that the tetravalent group represented by the formula (X-4) has from 18 to 22 carbon atoms.

$X_1$ is particularly preferably a tetravalent group represented by the following formula (X-5) or (X-6):

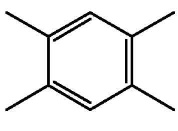

(X-5)

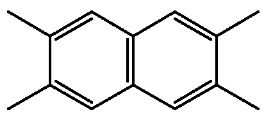

(X-6)

Next, the repeating structural unit of formula (2) will be described in detail below.

$R_2$ represents a divalent chain aliphatic group having from 5 to 16 carbon atoms, preferably from 6 to 14 carbon atoms, more preferably from 7 to 12 carbon atoms, and further preferably from 8 to 10 carbon atoms. The chain aliphatic group herein means a group derived from a chain aliphatic compound, and the chain aliphatic compound may be either saturated or unsaturated, and may be in the form of either linear or branched chain.

$R_2$ is preferably an alkylene group having from 5 to 16 carbon atoms, more preferably an alkylene group having from 6 to 14 carbon atoms, further preferably an alkylene group having from 7 to 12 carbon atoms, and particularly preferably an alkylene group having from 8 to 10 carbon atoms. The alkylene group may be either a linear alkylene

group or a branched alkylene group, and is preferably a linear alkylene group.

$R_2$ preferably represents at least one selected from the group consisting of an octamethylene group and a decamethylene group, and particularly preferably represents an octamethylene group.

$X_2$ is defined similarly to $X_1$ in the formula (1), and preferred embodiments thereof are also the same.

The content ratio of the repeating structural unit of the formula (1) with respect to the total of the repeating structural unit of the formula (1) and the repeating structural unit of the formula (2) is 20 mol% to 70 mol%. In the case where the content ratio of the repeating structural unit of the formula (1) is in the above range, the polyimide resin may also be sufficiently crystallized in an ordinary injection molding cycle. When the content ratio is less than 20 mol%, molding processability is deteriorated, and when the content ratio is more than 70 mol%, crystallinity is deteriorated to thereby result in deterioration in heat resistance.

The content ratio of the repeating structural unit of the formula (1) with respect to the total of the repeating structural unit of the formula (1) and the repeating structural unit of the formula (2) is preferably 65 mol% or less, more preferably 60 mol% or less, further preferably 50 mol% or less, and still further preferably less than 40 mol% from the viewpoint of exerting high crystallinity.

When the content ratio of the repeating structural unit of the formula (1) with respect to the total of the repeating structural unit of the formula (1) and the repeating structural unit of the formula (2) is 20 mol% or more and less than 40 mol%, the crystallinity of the polyimide resin (A) is higher, and thus a resin molded article can be obtained that has better heat resistance. The content ratio described above is preferably 25 mol% or more, more preferably 30 mol% or more, further preferably 32 mol% or more from the viewpoint of molding processability, and is still further preferably 35 mol% or less from the viewpoint of exerting high crystallinity.

The content ratio of the total of the repeating structural unit of the formula (1) and the repeating structural unit of the formula (2) with respect to the total repeating structural units constituting the polyimide resin (A) is preferably 50 to 100 mol%, more preferably 75 to 100 mol%, further preferably 80 to 100 mol%, and still further preferably 85 to 100 mol%.

The polyimide resin (A) may further contain a repeating structural unit represented by the following formula (3). In this case, the content ratio of the repeating structural unit of formula (3) with respect to the total of the repeating structural unit of formula (1) and the repeating structural unit of formula (2) is preferably 25 mol% or less. The lower limit thereof is not particularly limited but needs to exceed 0 mol%.

When containing the repeating structural unit of formula (3), from the viewpoint of improving heat resistance, the content ratio is preferably 5 mol% or more, and more preferably 10 mol% or more, while from the viewpoint of maintaining crystallinity, the content ratio is preferably 20 mol% or less, and more preferably 15 mol% or less.

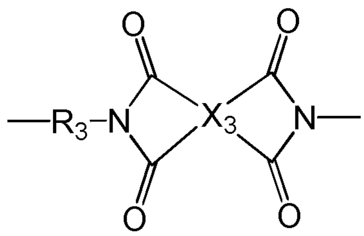

(3)

wherein $R_3$ represents a divalent group having from 6 to 22 carbon atoms containing at least one aromatic ring; and $X_3$ represents a tetravalent group having from 6 to 22 carbon atoms containing at least one aromatic ring.

$R_3$ is a divalent group having from 6 to 22 carbon atoms containing at least one aromatic ring. The aromatic ring may be either a monocyclic ring or a condensed ring, and examples thereof include a benzene ring, a naphthalene ring, an anthracene ring and a tetracene ring, but the aromatic ring is not limited thereto. Among these, a benzene ring and a naphthalene ring are preferred, and a benzene ring is more preferred.

$R_3$ has from 6 to 22 carbon atoms, and preferably has from 6 to 18 carbon atoms.

$R_3$ contains at least one aromatic ring, and preferably contains from 1 to 3 aromatic rings.

$R_3$ is preferably a divalent group represented by the following formula (R3-1) or (R3-2):

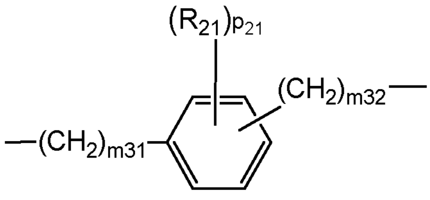

(R3-1)

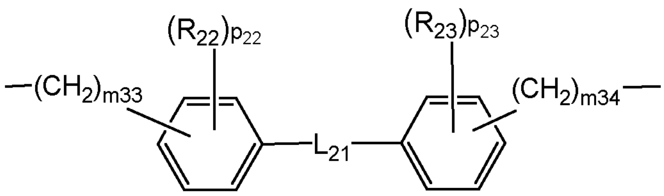

(R3-2)

wherein $m_{31}$ and $m_{32}$ each independently represent an integer of 0-2, and preferably 0 or 1; $m_{33}$ and $m_{34}$ each independently represent an integer of 0-2, and preferably 0 or 1; $R_{21}$, $R_{22}$ and $R_{23}$ each independently represent an alkyl group having from 1 to 4 carbon atoms, an alkenyl group having from 2 to 4 carbon atoms or an alkynyl group having from 2 to 4 carbon atoms; $p_{21}$, $p_{22}$ and $p_{23}$ each represent an integer of 0-4, and preferably 0; and $L_{21}$ represents a single bond, a carbonyl group or an alkylene group having from 1 to 4 carbon atoms.

$R_3$ is a divalent group having from 6 to 22 carbon atoms containing at least one aromatic ring, and therefore $m_{31}$, $m_{32}$, $R_{21}$ and $p_{21}$ in the formula (R3-1) are selected in such a manner that the divalent group represented by the formula (R3-1) has from 6 to 22 carbon atoms.

Similarly, $L_{21}$, $m_{33}$, $m_{34}$, $R_{22}$, $R_{23}$, $p_{22}$ and $p_{23}$ in the formula (R3-2) are selected in such a manner that the divalent group represented by the formula (R3-2) has from 12 to 22 carbon atoms.

$X_3$ is defined similarly to $X_1$ in the formula (1), and preferred embodiments thereof are also the same.

The end structure of the polyimide resin (A) is not particularly limited, and preferably has a chain aliphatic group having 5 to 14 carbon atoms at the end thereof.

The chain aliphatic group may be either saturated or unsaturated, and may be in the form of either linear or branched chain. When the polyimide resin (A) contains the above particular group at the end thereof, it is possible to obtain a resin composition excellent in heat aging resistance.

Example of the saturated chain aliphatic group having from 5 to 14 carbon atoms include an n-pentyl group, an n-hexyl group, an n-heptyl group, an n-octyl group, an n-nonyl group, an n-decyl group, an n-undecyl group, a lauryl group, an n-tridecyl group, an n-tetradecyl group, an isopentyl group, a neopentyl group, a 2-methylpentyl group, a 2-methylhexyl group, a 2-ethylpentyl group, a 3-ethylpentyl group, an isooctyl group, a 2-ethylhexyl group, a 3-ethylhexyl group, an isononyl group, a 2-ethyloctyl group, an isodecyl group, an isododecyl group, an isotridecyl group and an isotetradecyl group.

Example of the unsaturated chain aliphatic group having from 5 to 14 carbon atoms include a 1-pentenyl group, a 2-pentenyl group, a 1-hexenyl group, a 2-hexenyl group, a 1-heptenyl group, a 2-heptenyl group, a 1-octenyl group, a 2-octenyl group, a nonenyl group, a decenyl group, a dodecenyl group, a tridecenyl group and a tetradecenyl group.

Among these, the chain aliphatic group is preferably a saturated chain aliphatic group, and more preferably a saturated linear aliphatic group. The chain aliphatic group preferably has 6 or more carbon atoms, more preferably 7 or more carbon atoms and further preferably 8 or more carbon atoms, and preferably has 12 or less carbon atoms, more preferably 10 or less carbon atoms and further preferably 9 or less carbon atoms from the viewpoint of achievement of heat aging resistance. The chain aliphatic group may be adopted singly or in combinations of two or more.

The chain aliphatic group is particularly preferably at least one selected from the group consisting of an n-octyl group, an isooctyl group, a 2-ethylhexyl group, an n-nonyl group, an isononyl group, an n-decyl group and an isodecyl group, further preferably at least one selected from the group consisting of an n-octyl group, an isooctyl group, a 2-ethylhexyl group, an n-nonyl group, and an isononyl group, and most preferably at least one selected from the group consisting of an n-octyl group, an isooctyl group, and a 2-ethylhexyl group.

The polyimide resin (A) preferably contains only a chain aliphatic group having from 5 to 14 carbon atoms, besides a terminal amino group and a terminal carboxy group, at the end thereof from the viewpoint of heat aging resistance. When a group, besides the above groups, is contained at the end, the content thereof with respect to the chain aliphatic group having from 5 to 14 carbon atoms is preferably 10 mol% or less and more preferably 5 mol% or less.

The content of the chain aliphatic group having from 5 to 14 carbon atoms in the polyimide resin (A) is preferably 0.01 mol% or more, more preferably 0.1 mol% or more, and further preferably 0.2 mol% or more based on the total 100 mol% of the total repeating structural units constituting the polyimide resin (A) from the viewpoint of exerting excellent heat aging resistance. Further, to ensure a sufficient molecular weight and obtain good mechanical properties, the content of the chain aliphatic group having from 5 to 14 carbon atoms in the polyimide resin (A) is, with respect to a total of 100 mol% of all the repeating structural units constituting the polyimide resin (A), preferably 10 mol% or less, more preferably 6 mol% or less, further preferably 3.5 mol% or less, still further preferably 2.0 mol% or less, and even still further preferably 1.2 mol% or less.

The content of the chain aliphatic group having from 5 to 14 carbon atoms in the polyimide resin (A) can be

determined by depolymerization of the polyimide resin (A).

The polyimide resin (A) preferably has a melting point of 360°C or lower and a glass transition temperature of 150°C or higher. The melting point of the polyimide resin (A) is more preferably 280°C or higher and further preferably 290°C or higher from the viewpoint of heat resistance, and is preferably 345°C or lower, more preferably 340°C or lower, and further preferably 335°C or lower from the viewpoint of exerting high molding processability. In addition, the glass transition temperature of the polyimide resin (A) is more preferably 160°C or higher and more preferably 170°C or higher from the viewpoint of heat resistance, and is preferably 250°C or lower, more preferably 230°C or lower, and further preferably 200°C or lower from the viewpoint of exerting high molding processability.

In addition, in the polyimide resin (A), the exothermic amount (hereinafter, also simply referred to as "exothermic amount of crystallization") of the crystallization exothermic peak observed in melting and then cooling of the polyimide resin at a cooling rate of 20°C/min with differential scanning calorimetric measurement is preferably 5.0 mJ/mg or more, more preferably 10.0 mJ/mg or more, and further preferably 17.0 mJ/mg or more from the viewpoint of enhancement of crystallinity, heat resistance, mechanical strength, and chemical resistance. The upper limit of the exothermic amount of crystallization is not particularly limited, and is usually 45.0 mJ/mg or less.

The melting point, glass transition temperature, and exothermic amount of crystallization of the polyimide resin (A) can all be measured by a differential scanning calorimeter, and specifically, can be measured by the methods described in the examples.

The weight average molecular weight Mw of the polyimide resin (A) is preferably in the range of 10,000 to 150,000, more preferably 15,000 to 100,000, further preferably 20,000 to 80,000, still further preferably 30,000 to 70,000, and still further preferably 35,000 to 65,000. If the weight average molecular weight Mw of the polyimide resin (A) is 10,000 or more, the mechanical strength of the molded article is good, and if Mw is 40,000 or more, the stability of the mechanical strength is good and it is easier to form the microphase-separated structure described above, thereby achieving much lower CTE. Further, if Mw is 150,000 or less, the formability is good.

The weight average molecular weight Mw of the polyimide resin (A) can be measured by a gel permeation chromatography (GPC) method using polymethyl methacrylate (PMMA) as a standard sample, and specifically, can be measured by the method described in the examples.

The logarithmic viscosity of the polyimide resin (A) at 30°C in a 5 mass% concentrated sulfuric acid solution is preferably in the range of 0.8 to 2.0 dL/g and more preferably 0.9 to 1.8 dL/g. If the logarithmic viscosity is 0.8 dL/g or more, it is easy to obtain sufficient mechanical strength when formed as a molded article. If the logarithmic viscosity is 2.0 dL/g or less, formability and handleability are good. The logarithmic viscosity $\mu$ is obtained according to the following expression by measuring the elapsed times for flowing concentrated sulfuric acid and the polyimide resin solution at 30°C with a Cannon-Fenske viscometer.

$$\mu = \ln[(ts/t_0)/C]$$

$t_0$: elapsed time for flowing concentrated sulfuric acid
ts: elapsed time for flowing polyimide resin solution
C: 0.5 (g/dL)

(Method for producing polyimide resin (A))

The polyimide resin (A) may be produced by reacting a tetracarboxylic acid component and a diamine component. The tetracarboxylic acid component contains a tetracarboxylic acid containing at least one aromatic ring and/or a derivative thereof, and the diamine component contains a diamine containing at least one alicyclic hydrocarbon structure and a chain aliphatic diamine.

The tetracarboxylic acid containing at least one aromatic ring is preferably a compound having four carboxy groups that are bonded directly to the aromatic ring, and may contain an alkyl group in the structure thereof. The tetracarboxylic acid preferably has from 6 to 26 carbon atoms. Preferred examples of the tetracarboxylic acid include pyromellitic acid, 2,3,5,6-toluenetetracarboxylic acid, 3,3',4,4'-benzophenonetetracarboxylic acid, 3,3',4,4'-biphenyltetracarboxylic acid and 1,4,5,8-naphthalenetetracarboxylic acid. Among these, pyromellitic acid is more preferred.

Examples of the derivative of the tetracarboxylic acid containing at least one aromatic ring include an anhydride and an alkyl ester compound of a tetracarboxylic acid containing at least one aromatic ring. The derivative of the tetracarboxylic acid preferably has from 6 to 38 carbon atoms. Examples of the anhydride of the tetracarboxylic acid include pyromellitic monoanhydride, pyromellitic dianhydride, 2,3,5,6-toluenetetracarboxylic dianhydride, 3,3',4,4'-diphenylsulfonetetracarboxylic dianhydride, 3,3',4,4'-benzophenonetetracarboxylic dianhydride, 3,3',4,4'-biphenyltetracarboxylic dianhydride and 1,4,5,8-naphthalenetetracarboxylic dianhydride. Examples of the alkyl ester compound of the tetracarboxylic acid include dimethyl pyromellitate, diethyl pyromellitate, dipropyl pyromellitate, diisopropyl pyromellitate, dimethyl

2,3,5,6-toluenetetracarboxylate, dimethyl 3,3',4,4'-diphenylsulfonetetracarboxylate, dimethyl 3,3',4,4'-benzophenonetetracarboxylate, dimethyl 3,3',4,4'-biphenyltetracarboxylate and dimethyl 1,4,5,8-naphthalenetetracarboxylate. In the alkyl ester of a tetracarboxylic acid, the alkyl group preferably has 1 to 3 carbon atoms.

The tetracarboxylic acid containing at least one aromatic ring and/or the derivative thereof may be used as a sole compound selected from the aforementioned compounds or may be used as a combination of two or more compounds.

The diamine containing at least one alicyclic hydrocarbon structure preferably has from 6 to 22 carbon atoms, and preferred examples thereof include 1,2-bis(aminomethyl)cyclohexane, 1,3-bis(aminomethyl)cyclohexane, 1,4-bis(aminomethyl)cyclohexane, 1,2-cyclohexanediamine, 1,3-cyclohexanediamine, 1,4-cyclohexanediamine, 4,4'-diaminodicyclohexylmethane, 4,4'-methylenebis(2-methylcyclohexylamine), carvone diamine, limonene diamine, isophorone diamine, norbornane diamine, bis(aminomethyl)tricyclo[5.2.1.0$^{2,6}$]decane, 3,3'-dimethyl-4,4'-diaminodicyclohexylmethane and 4,4'-diaminodicyclohexylpropane. These compounds may be used solely or may be used as a combination of two or more compounds selected therefrom. Among these, 1,3-bis(aminomethyl)cyclohexane is preferably used. A diamine containing an alicyclic hydrocarbon structure generally has conformational isomers, and the ratio of the cis isomer and the trans isomer is not particularly limited.

The chain aliphatic diamine may be in the form of either linear or branched chain, and has preferably from 5 to 16 carbon atoms, more preferably from 6 to 14 carbon atoms and further preferably from 7 to 12 carbon atoms. The linear moiety having from 5 to 16 carbon atoms may contain an ether bond in the course thereof. Preferred examples of the chain aliphatic diamine include 1,5-pentamethylenediamine, 2-methylpentane-1,5-diamine, 3-methylpentane-1,5-diamine, 1,6-hexamethylenediamine, 1,7-heptamethylenediamine, 1,8-octamethylenediamine, 1,9-nonamethylenediamine, 1,10-decamethylenediamine, 1,11-undecamethylenediamine, 1,12-dodecamethylenediamine, 1,13-tridecamethylenediamine, 1,14-tetradecamethylenediamine, 1,16-hexadecamethylenediamine, and 2,2'-(ethylenedioxy)bis(ethyleneamine).

The chain aliphatic diamine may be used as a sole compound or as a mixture of plural kinds thereof. Among these, a chain aliphatic diamine having from 8 to 10 carbon atoms can be preferably used, and at least one selected from the group consisting of 1,8-octamethylenediamine and 1,10-decamethylenediamine can be particularly preferably used.

In the production of the polyimide resin (A), the molar ratio of the charged amount of the diamine containing at least one alicyclic hydrocarbon structure with respect to the total amount of the diamine containing at least one alicyclic hydrocarbon structure and the chain aliphatic diamine is preferably 20 to 70 mol%. The molar ratio is preferably 25 mol% or more, more preferably 30 mol% or more, further preferably 32 mol% or more, and is preferably 60 mol% or less, more preferably 50 mol% or less, further preferably less than 40 mol, and further preferably 35 mol% or less from the viewpoint of exerting high crystallinity.

The diamine component may contain a diamine containing at least one aromatic ring. The diamine containing at least one aromatic ring preferably has from 6 to 22 carbon atoms, and examples thereof include orthoxylylenediamine, metaxylylenediamine, paraxylylenediamine, 1,2-diethynylbenzenediamine, 1,3-diethynylbenzenediamine, 1,4-diethynylbenzenediamine, 1,2-diaminobenzene, 1,3-diaminobenzene, 1,4-diaminobenzene, 4,4'-diaminodiphenyl ether, 3,4'-diaminodiphenyl ether, 4,4'-diaminodiphenylmethane, α, α'-bis(4-aminophenyl)-1,4-diisopropylbenzene, α, α'-bis(3-aminophenyl)-1,4-diisopropylbenzene, 2,2-bis(4-(4-aminophenoxy)phenyl)propane, 2,6-diaminonaphthalene and 1,5-diaminonaphthalene.

The molar ratio of the charged amount of the diamine containing at least one aromatic ring with respect to the total amount of the diamine containing at least one alicyclic hydrocarbon structure and the chain aliphatic diamine is preferably 25 mol% or less, more preferably 20 mol% or less, and further preferably 15 mol% or less.

The lower limit of the molar ratio is not particularly limited, but is preferably 5 mol% or more, and more preferably 10 mol% or more, from the viewpoint of enhancement of the heat resistance.

In addition, the molar ratio is still further preferably 12 mol% or less, still further preferably 10 mol% or less, still further preferably 5 mol% or less and still further preferably 0 mol% from the viewpoint of a decrease in coloration of the polyimide resin.

In the production of the polyimide resin (A), the charged amount ratio of the tetracarboxylic acid component and the diamine component is preferably from 0.9 to 1.1 mol of the diamine component per 1 mol of the tetracarboxylic acid component.

In the production of the polyimide resin (A), an end capping agent may be mixed in addition to the tetracarboxylic acid component and the diamine component. The end capping agent is preferably at least one selected from the group consisting of a monoamine and a dicarboxylic acid. It is sufficient for the amount of the end capping agent used to be an amount in which a desired amount of the end group can be introduced into the polyimide resin (A). This used amount is, based on one mole of the tetracarboxylic acid and/or derivative thereof, preferably from 0.0001 to 0.1 moles, more preferably from 0.001 to 0.06 moles, further preferably from 0.002 to 0.035 moles, still further preferably from 0.002 to 0.020 moles, and even still further preferably from 0.002 to 0.012 moles.

Among them, monoamine end capping agents are preferable as the end capping agent, and from the viewpoint of introducing the above-described chain aliphatic group having from 5 to 14 carbon atoms at an end of the polyimide resin (A) to improve heat aging resistance, a monoamine that has a chain aliphatic group having from 5 to 14 carbon atoms is more preferable, and a monoamine that has a saturated linear aliphatic group having from 5 to 14 carbon atoms is further preferable.

The end capping agent is particularly preferably at least one selected from the group consisting of n-octylamine, isooctylamine, 2-ethylhexylamine, n-nonylamine, isononylamine, n-decylamine, and isodecylamine, further preferably at least one selected from the group consisting of n-octylamine, isooctylamine, 2-ethylhexylamine, n-nonylamine, and isononylamine, and most preferably at least one selected from the group consisting of n-octylamine, isooctylamine, and 2-ethylhexylamine.

As a polymerization method for producing the polyimide resin (A), a known polymerization method may be applied, and the method described in WO 2016/147996 can be used.

<Amorphous resin (B)>

The polyimide resin composition of the present invention contains the above-described polyimide resin (A) and an amorphous resin (B) containing a repeating structural unit represented by the following formula (I),

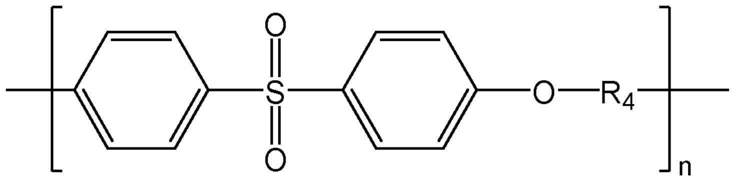 (I)

wherein $R_4$ represents a single bond or a divalent group having from 6 to 22 carbon atoms containing at least one aromatic ring; and n is the number of repeating structural units, and is a number exceeding 1.

The polyimide resin composition of the present invention can produce a molded article having a low CTE by containing the polyimide resin (A) and the amorphous resin (B) having a specific structure. It is noted that the amorphous resin (B) in the present invention does not contain a repeating structural unit having an imide bond.

From the viewpoint of achieving a lower CTE, the divalent group having from 6 to 22 carbon atoms containing at least one aromatic ring in $R_4$ of formula (I) is preferably a divalent aromatic group having from 6 to 22 carbon atoms that may contain an ether bond, and more preferably a divalent group represented by any of the following formulae (a) to (c).

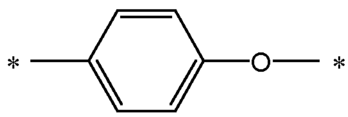 (a)

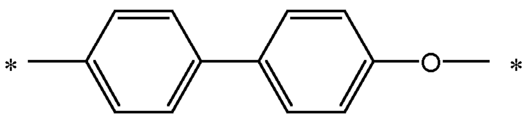 (b)

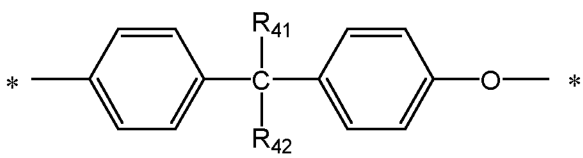 (c)

$R_{41}$ and $R_{42}$ are each independently a hydrogen atom or an alkyl group having from 1 to 4 carbon atoms, and * indicates a bonding position.

Examples of the alkyl group having from 1 to 4 carbon atoms of $R_{41}$ and $R_{42}$ include a methyl group, an ethyl group, an n-propyl group, an isopropyl group, an n-butyl group, an isobutyl group, a sec-butyl group, and a tert-butyl group.

From the viewpoint of achieving a lower CTE, $R_{41}$ and $R_{42}$ are each independently preferably a hydrogen atom, a methyl group, an ethyl group, an n-propyl group, or an isopropyl group, more preferably a hydrogen atom or a methyl group, and further preferably a methyl group.

From the viewpoint of achieving a lower CTE and the viewpoint of reducing the water absorption rate, $R_4$ of formula (I) is preferably a single bond or a divalent group represented by any of the above formulae (a) to (c), and more preferably a single bond or a divalent group represented by either of the above formula (b) or (c).

From the viewpoint of achieving a lower CTE and the viewpoint of reducing the water absorption rate, more preferably, the component (B) is an amorphous resin containing a repeating structural unit represented by any one of the following formulae (I-1) to (I-3),and further preferably, the component (B) is an amorphous resin containing 50% by mass or more, preferably 70% by mass or more, more preferably 80% by mass or more, further preferably 90% by mass or more, and still further preferably 95% by mass or more of the repeating structural unit represented by any of the following formulae (I-1) to (I-3).

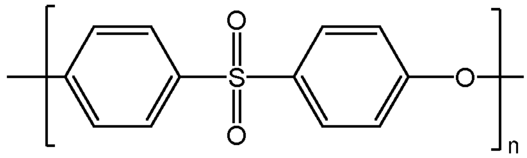

(I-1)

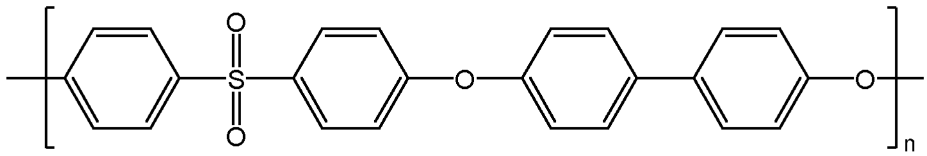

(I-2)

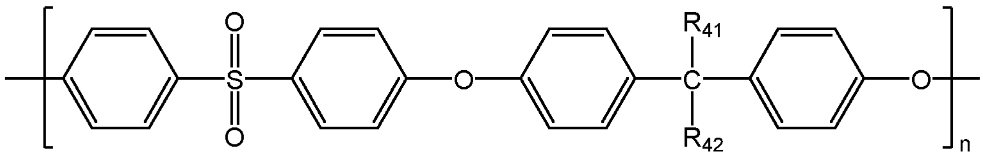

(I-3)

$R_{41}$ and $R_{42}$ each independently represent a hydrogen atom or an alkyl group having from 1 to 4 carbon atoms; and n is the number of repeating structural units, and is a number exceeding 1.

The alkyl group having from 1 to 4 carbon atoms of $R_{41}$ and $R_{42}$ is the same as above, and from the viewpoint of achieving a lower CTE, is preferably a hydrogen atom, a methyl group, an ethyl group, an n-propyl group, or an isopropyl group, more preferably a hydrogen atom or a methyl group, and further preferably a methyl group.

The amorphous resin containing a repeating structural unit represented by formula (I-1) is herein referred to as "amorphous resin (B1)", the amorphous resin containing a repeating structural unit represented by formula (I-2) is herein referred to as "amorphous resin (B2)", and the amorphous resin containing a repeating structural unit represented by formula (I-3) is herein referred to as "amorphous resin (B3)".

(Amorphous resin (B1))

The amorphous resin (B1) contains a repeating structural unit represented by the following formula (I-1), in which n is the number of repeating structural units, and is a number exceeding 1.

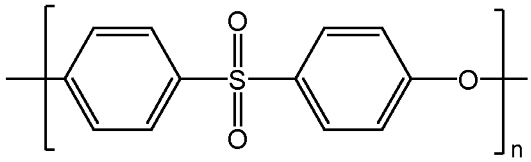

(I-1)

More preferred examples of the amorphous resin (B 1) include resins having a structure represented by the following formula (I-1a):

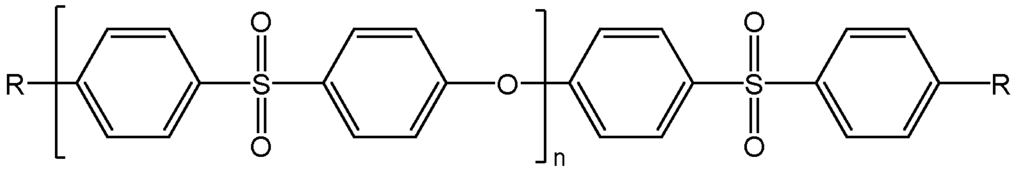
(I-1a)

wherein R represents an end group, and is Cl or OH; and n is the same as above.

From the viewpoint of achieving a lower CTE, R in formula (I-1a) is preferably Cl.

The glass transition temperature of the amorphous resin (B1) is preferably 210°C or higher, and more preferably 215°C or higher, from the viewpoint of achieving a lower CTE, and is preferably 280°C or lower, and more preferably 260°C or lower from the viewpoint of formability.

The glass transition temperature can be measured by the same method as described above.

The intrinsic viscosity of the amorphous resin (B1) at 25°C is preferably 0.20 to 1.00 dL/g, more preferably 0.25 to 1.00 dL/g, and further preferably 0.30 to 0.80 dL/g from the viewpoint of achieving a lower CTE.

The intrinsic viscosity of the amorphous resin (B1) can be measured by a method conforming to JIS K7367-5:2000, and specifically, can be measured by the method described in the examples. The value of the intrinsic viscosity is preferably within the above range when measured at 25°C using a powder of the amorphous resin (B 1) that has not been subjected to a thermal history, such as melting.

The number average molecular weight (Mn) of the amorphous resin (B1) is preferably 2,000 to 25,000, more preferably 3,000 to 25,000, further preferably 3,500 to 25,000, still further preferably 3,500 to 25,000, and still further preferably 5,000 to 20,000 from the viewpoint of achieving a lower CTE.

The weight average molecular weight (Mw) of the amorphous resin (B1) is preferably 5,000 to 80,000, more preferably 7,000 to 80,000, further preferably 8,000 to 80,000, still further preferably 8,000 to 60,000, still further preferably 10,000 to 55,000, and still further preferably 12,000 to 55,000 from the viewpoint of achieving a lower CTE.

The number average molecular weight and weight average molecular weight of the amorphous resin (B1) can be measured by a gel permeation chromatography (GPC) method using polymethyl methacrylate (PMMA) as a standard sample, and specifically, can be measured by the methods described in the examples. The value of the number-average molecular weight and weight-average molecular weight are preferably within the above range when measured using a powder of the amorphous resin (B 1) that has not been subjected to a thermal history, such as melting.

The form of the amorphous resin (B 1) is not particularly limited, and either a powder or pellets can be used. When pellets are used as the amorphous resin (B1), the morphology of the resulting resin composition and molded article may differ from that when a powder is used, and as a result, the mechanical properties of the resulting molded article may differ. According to the findings of the present inventors, when pellets are used as the amorphous resin (B1), the toughness of the resulting molded article tends to improve compared to when a powder is used. However, a powder is more preferable from the viewpoint of improving dispersibility in the polyimide resin (A) and maintaining properties without a thermal history such as melting.

Commercially available products can also be used as the amorphous resin (B 1). Commercially available examples of the amorphous resin (B1) include the "Sumika Excel PES" series (3600P, 4100P, 4800P, 5200P, 5400P, 5900P, 7600P, 5003P, 5003MPS, 3600G, 4100G, 4800G) produced by Sumitomo Chemical Co., Ltd., the "Ultrazone E" series (E1010, E2010, E2020P, E3010, E6020P) produced by BASF, and the like.

(Amorphous resin (B2))

The amorphous resin (B2) is an amorphous resin containing a repeating structural unit represented by the following formula (I-2), and more preferably is an amorphous resin represented by the following formula (I-2), in which n is the number of repeating structural units, and is a number exceeding 1.

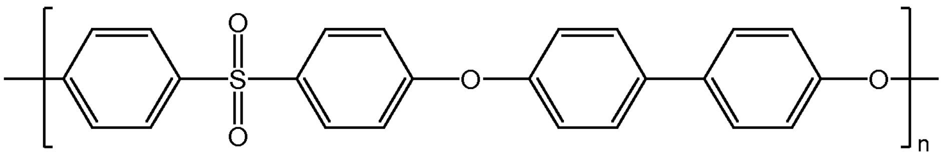
(I-2)

The glass transition temperature of the amorphous resin (B2) is preferably 170°C or higher, and more preferably 180°C or higher from the viewpoint of achieving a lower CTE, and preferably 230°C or lower from the viewpoint of formability.

The glass transition temperature can be measured by the same method as described above.

The intrinsic viscosity of the amorphous resin (B2) at 25°C is preferably 0.20 to 1.00 dL/g, more preferably 0.25 to 1.00 dL/g, and further preferably 0.30 to 0.80 dL/g.
The intrinsic viscosity of the amorphous resin (B2) can be measured by the same method as described above.
Commercially available products can also be used as the amorphous resin (B2). Commercially available examples of the amorphous resin (B2) include the "Ultrazone E" series (S2010, S3010, S6010) produced by BASF, and the like, represented by formula (I-2).

(Amorphous resin (B3))

The amorphous resin (B3) is an amorphous resin containing a repeating structural unit represented by the following formula (I-3), and more preferably is an amorphous resin represented by the following formula (I-3).

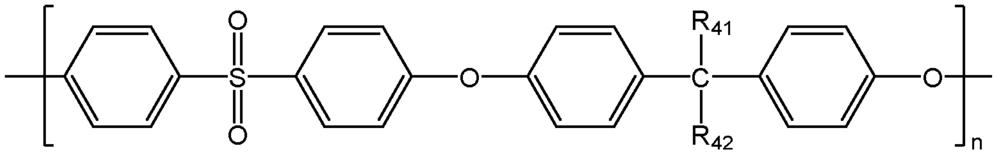
(I-3)

$R_{41}$ and $R_{42}$ each independently represent a hydrogen atom or an alkyl group having from 1 to 4 carbon atoms; and n is the number of repeating structural units, and is a number exceeding 1.
The alkyl group having from 1 to 4 carbon atoms of $R_{41}$ and $R_{42}$ is the same as above, and from the viewpoint of achieving a lower CTE, is preferably a hydrogen atom, a methyl group, an ethyl group, an n-propyl group, or an isopropyl group, more preferably a hydrogen atom or a methyl group, and further preferably a methyl group.
That is, the amorphous resin (B3) is still further preferably an amorphous resin containing a repeating structural unit represented by the following formula (I-3c), and is further preferably an amorphous resin represented by the following formula (I-3c), in which n is the number of repeating structural units, and is a number exceeding 1.

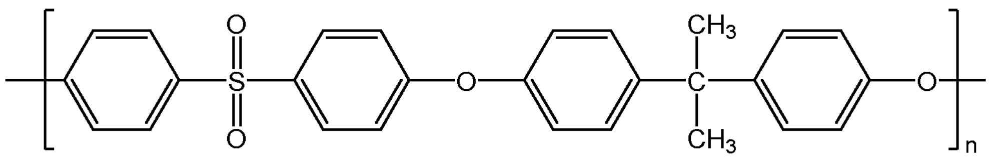
(I-3c)

The glass transition temperature of the amorphous resin (B3) is preferably 190°C or higher, and more preferably 200°C or higher from the viewpoint of achieving a lower CTE, and preferably 230°C or lower from the viewpoint of formability.
The glass transition temperature can be measured by the same method as described above.
Commercially available products can also be used as the amorphous resin (B3). Commercially available examples of the amorphous resin (B3) include the "Ultrazone P" series (P3010 produced by BASF, and the like, represented by formula (I-3c).
The component (B) may be used alone, or two or more types may be used in combination.
Among the above, from the viewpoint of achieving a lower CTE and the viewpoint of reducing the water absorption rate, it is further preferable to select the component (B) from the group consisting of one or more of the amorphous resin (B2) and the amorphous resin (B3), and still further preferable from one or more selected from the group consisting of an amorphous resin represented by formula (I-2) and an amorphous resin represented by formula (I-3c).

<Mass ratio>

The mass ratio [(A)/{ (A)+(B)}] of the component (A) with respect to a total mass of the component (A) and the component (B) in the polyimide resin composition is, from the viewpoint of obtaining the effects of the present invention, 0.01 or more and 0.99 or less. In addition, from the viewpoint of further reducing the water absorption rate, this mass ratio is more preferably 0.10 or more, further preferably 0.20 or more, still further preferably 0.25 or more, still further preferably 0.30 or more, still further preferably 0.50 or more, and still further preferably 0.60 or more, and from the viewpoint of achieving a lower CTE, this ratio is more preferably 0.90 or less, further preferably 0.80 or less, and still further preferably 0.75 or less.
When the component (B) is an amorphous resin (B1) containing a repeating structural unit represented by formula (1-1), the mass ratio [(A)/{(A)+(B1)}] of the component (A) with respect to a total mass of the component (A) and the component (B1) in the polyimide resin composition is, from the viewpoint of achieving a lower CTE and the

viewpoint of reducing the water absorption rate, preferably more than 0.65 and 0.99 or less, more preferably more than 0.65 and 0.95 or less, and further preferably 0.70 or more and 0.90 or less.

From the viewpoint of obtaining the effects of the present invention, the total content of the polyimide resin (A) and the amorphous resin (B) in the polyimide resin composition is preferably 50% by mass or more, more preferably 70% by mass or more, further preferably 80% by mass or more, and still further preferably 90% by mass or more. The upper limit is 100% by mass.

<Additives>

The polyimide resin composition of the present invention may contain additives such as a filler, a reinforcement fiber, a delusterant, a nucleating agent, a plasticizer, an antistatic agent, an anti-coloring agent, an anti-gelling agent, a flame retardant, a colorant, a slidability improver, an antioxidant, a UV absorbent, a conducting agent, and a resin-modifying agent, as necessary.

The content of the additive is not particularly limited, but from the viewpoint that the effect of the additive is exerted while maintaining the physical properties derived from the polyimide resin (A) and the amorphous resin (B), the content in the polyimide resin composition is usually 50% by mass or less, preferably from 0.0001 to 30% by mass, more preferably from 0.0001 to 15% by mass, and further preferably from 0.001 to 10% by mass.

Although the polyimide resin composition of the present invention can take any form, it is preferably a pellet.

Since the polyimide resin (A) and the amorphous resin (B) have thermoplasticity, for example, the polyimide resin (A), the amorphous resin (B), and various optional components as necessary can be melt-kneaded in an extruder to extrude a strand, and the strand can then be cut into pellets. A molded article having a desired shape can be easily produced by introducing the obtained pellets into a molding machine and thermoforming by the method described later.

The glass transition temperature of the polyimide resin composition of the present invention is, from the viewpoint of heat resistance, preferably 160°C or higher, more preferably 170°C or higher, further preferably 180°C or higher, and still further preferably 200°C or higher, and from the viewpoint of exerting high formability, the glass transition temperature is preferably 250°C or lower, more preferably 240°C or lower, and further preferably 230°C or lower. The glass transition temperature can be measured by the same method as described above.

<Coefficient of linear thermal expansion (CTE)>

According to the polyimide resin composition of the present invention, a molded article having a low CTE can be produced. For example, a molded article having thickness of 4 mm (5 mm × 4 mm × 10 mm) obtained by molding the polyimide resin composition can have a coefficient of linear thermal expansion of 60 ppm/°C or less as measured in a range of 23 to 220°C in accordance with JIS K7197:2012 of preferably 60 ppm/°C or less.

It is noted that since the CTE value of a stretched molded article varies, the molded article used for the CTE measurement is preferably a non-stretched molded article, and more preferably an injection-molded article.

Even in an injection molded article, there is a machine direction (MD) and a direction (TD) perpendicular to the machine direction, and the CTE may be different in the MD from that in the TD. In this case, it is preferable that the coefficient of linear thermal expansion in at least one of MD and the TD is 60 ppm/°C or less, and it is more preferable that the coefficient of linear thermal expansion in both the MD and the TD is 60 ppm/°C or less.

In an injection-molded article having a thickness of 4 mm obtained by molding a polyimide resin composition, the value of the coefficient of linear thermal expansion that is the lower between the MD and the TD can be preferably 55 ppm/°C or less, more preferably 50 ppm/°C or less, further preferably 45 ppm/°C or less, still further preferably 40 ppm/°C or less, and still further preferably 35 ppm/°C or less.

In addition, in an injection molded article having a thickness of 4 mm obtained by molding a polyimide resin composition, the total value of the coefficient of linear thermal expansion in the MD and the TD can be preferably 100 ppm/°C or less, more preferably 95 ppm/°C or less, and further preferably 90 ppm/°C or less.

The coefficient of linear thermal expansion of a molded article is a value measured in compression mode by thermomechanical analysis (TMA), and specifically can be measured by the method described in the examples.

<Water absorption rate>

According to the polyimide resin composition of the present invention, a molded article having a low water absorption rate can be produced. For example, a 30 mm × 20 mm × 4 mm thick molded article obtained by molding a polyimide resin composition can have a water absorption rate as measured in accordance with JIS K7209:2000 when immersed in 23°C water for 24 hours of preferably 0.30% or less, more preferably 0.25% or less, and further preferably 0.20% or less.

The water absorption rate is a value calculated from the following formula, where $W_0$ is the mass of the molded article before immersion in water, and $W_1$ is the mass of the molded article after 24 hours of immersion in 23°C water.

$$\text{Water absorption rate (\%)} = [(W_1-W_0)/W_0]\times 100$$

The water absorption rate can be specifically measured by the method described in the examples.

[Molded article]

The present invention provides a molded article including the polyimide resin composition.

Since the polyimide resin composition of the present invention has thermoplasticity, the molded article of the present invention can be easily produced by heat-molding. Examples of the heat molding method include injection molding, extrusion molding, blow molding, heat press molding, vacuum molding, pneumatic molding, laser molding, welding, and heat adhesion, and the polyimide resin composition of the present invention may be molded by any molding method that includes a heat melting step.

The molding temperature depends on the thermal properties (melting point and glass transition temperature) of the polyimide resin composition, but for example, in injection-molding, molding is possible at a molding temperature of lower than 400°C and a mold temperature of 220°C or lower.

The method for producing a molded article preferably includes the step of heat-molding the polyimide resin composition at a temperature of lower than 400°C. Examples of the specific procedure include the following methods.

First, the polyimide resin (A) is dry blended with the amorphous resin (B) and various optional components as necessary, then introduced into an extruder, melted at a temperature of preferably less than 400°C, and melt-kneaded in the extruder and extruded to produce pellets. Alternatively, the polyimide resin (A) may be introduced into the extruder, melted at a temperature of preferably less than 400°C, the amorphous resin (B) and various optional components introduced thereto and melt-kneaded with the polyimide resin (A) in the extruder, and extruded to produce the pellets.

The pellets may be dried, then introduced in various kinds of molding machines, and heat-molded preferably at a temperature of lower than 400°C, thereby producing a molded article having a desired shape.

The molded article of the present invention has a low coefficient of linear thermal expansion and excellent dimensional stability, as well as a low water absorption rate, and therefore are suitable for, for example, films, copper clad laminates and electrical and electronic members requiring a low coefficient of linear thermal expansion.

Examples

The present invention will be described in more detail with reference to examples below, but the present invention is not limited thereto. Further, various measurements and evaluations in each Production Example and Example were carried out in the following manner.

<Infrared spectroscopy (IR measurement)>

The IR measurement of the polyimide resin was performed with "JIR-WINSPEC 50", produced by JEOL, Ltd.

<Logarithmic viscosity μ>

The polyimide resin was dried at from 190 to 200°C for 2 hours, and then 0.100 g of the polyimide resin was dissolved in 20 mL of concentrated sulfuric acid (96%, produced by Kanto Chemical Co., Inc.) to form a polyimide resin solution, and the measurement was made at 30°C with a Cannon-Fenske viscometer using the polyimide resin solution as a measurement sample. The logarithmic viscosity μ was obtained according to the following expression.

$$\mu = \ln[(ts/t_0)/C]$$

$t_0$: elapsed time for flowing concentrated sulfuric acid
ts: elapsed time for flowing polyimide resin solution
C: 0.5 g/dL

<Melting point, glass transition temperature, crystallization temperature, and exothermic amount of crystallization>

The melting point Tm of the polyimide resin and the glass transition temperature Tg, crystallization temperature Tc and the exothermic amount of crystallization ΔHm of the polyimide resin, amorphous resin, and polyimide resin composition were measured with a differential scanning calorimeter ("DSC-6220", produced by SII Nanotechnology,

Inc.). In the measurement of the crystallization temperature Tc, a resin powder was used as the measurement samples for the polyimide resin and amorphous resin (B1), and pellets were used for the amorphous resin (B2), amorphous resin (B3), and polyimide resin composition.

In a nitrogen atmosphere, a thermal history of the following conditions was imposed on the measurement samples. The condition of the thermal history included the first heating (heating rate: 10°C/min), then cooling (cooling rate: 20 °C/min), and then second heating (heating rate: 10°C/min).

The melting point Tm was determined by reading the peak top value of the endothermic peak observed in the second heating. The glass transition temperature (Tg) was determined by reading the value observed in the second heating. The crystallization temperature (Tc) was determined by reading the peak top value of the exothermic peak observed in cooling. Regarding Tm, Tg, and Tc, if a plurality of peaks were observed, the peak top value of each peak was read.

The exothermic amount of crystallization ΔHm (mJ/mg) was calculated from the area of the exothermic peak observed in cooling.

<Crystallization half-time>

The crystallization half-time of the polyimide resin was measured with a differential scanning calorimeter ("DSC-6220", produced by SII Nanotechnology, Inc.).

When the polyimide resin was held at 420°C for 10 minutes in a nitrogen atmosphere so as to completely melt, then quenched at a cooling rate of 70°C/min, the time required from the appearance of the observed crystallization peak to the peak top thereof was calculated. In Table 1, when the half-crystallization time was 20 seconds or less, the half-crystallization time was written as "<20".

<Weight average molecular weight and number average molecular weight>

The weight average molecular weight (Mw) of the polyimide resin and the weight average molecular weight and number average molecular weight of the amorphous resin (B 1) were measured with a gel permeation chromatography (GPC) measurement apparatus "Shodex GPC-101" produced by Showa Denko K.K. under the following conditions.

Column: Shodex HFIP-806M
Mobile phase solvent: Hexafluoroisopropanol (HFIP) containing 2 mM sodium trifluoroacetate
Column temperature: 40°C
Flow rate of mobile phase: 1.0 mL/min
Specimen concentration: about 0.1 mass%
Detector: IR detector
Amount of injection: 100 μm
Calibration curve: standard PMMA

<Intrinsic viscosity [η]>

The intrinsic viscosity of the amorphous resins (B1) and (B2) was measured according to JIS K7367-5:2000 by the following method. As the measurement samples, a powder of the amorphous resin (B 1) powder and pellets of the amorphous resin (B2) were used.

Solutions of the measurement sample in N,N-dimethylformamide with concentrations of 0.5 g/dL, 1.0 g/dL, and 1.5 g/dL were prepared. The viscosity of each of those solutions was measured three times using an Ubbelohde viscometer (No. 0B) in a constant temperature bath at 25 ±0.05°C, and the reduced viscosity (unit: dL/g) was calculated from the average value thereof. A calibration curve was drawn with the concentration (g/dL) of the measurement sample plotted on the horizontal axis and reduced viscosity (dL/g) plotted on the vertical axis, and the viscosity value extrapolated at a concentration of 0 g/dL was taken as the value of the intrinsic viscosity (units: dL/g).

<$\Delta Hm_0 \times$mass proportion of component (A)>

Calculation was made by taking the exothermic amount of crystallization of polyimide resin 1 (component (A)) obtained in Production Example 1 to be $\Delta Hm_0$, and multiplying this value by the mass proportion of component (A) in the polyimide resin composition of each example.

<Water absorption rate>

The water absorption rate was measured in accordance with JIS K7209:2000. Using the polyimide resin of Production Example 1, the amorphous resin, or the polyimide resin composition produced in each example, an injection-molded article was produced by the method described below, and cut into a size of 30 mm × 20 mm × thickness 4 mm. The molded article was conditioned for 24 hours or more in an environment of 23°C and 50% relative humidity, and then used for measurement.

The molded article was dried in a hot air circulation oven at 50°C for 24 hours, then returned to room temperature in a desiccator, and the mass ($W_0$) of the molded article was measured at 23°C and 50% relative humidity. Subsequently, the molded article was immersed in water at 23°C for 24 hours, moisture on the surface of the molded article was wiped off, and then the mass ($W_1$) one minute later was measured. The water absorption rate was calculated based on the following formula, and the average value of three measurements is shown in Table 1.

$$\text{Water absorption rate (\%)} = [(W_1-W_0)/W_0]\times 100$$

<Coefficient of linear thermal expansion (CTE)>

The CTE was measured in accordance with JIS K7197:2012. Using the polyimide resin of Production Example 1, the amorphous resin, or the polyimide resin composition produced in each example, an injection-molded article was produced by the method described below, cut into a size of 5 mm × 4 mm × 10 mm, and used for measurement.

Using the above injection-molded article as a measurement sample, a thermomechanical analyzer "TMA7100C" produced by Hitachi High-Tech Science Corporation was used to carry out TMA measurement in a nitrogen flow (150 mL/min) in compression mode with a load of 49 mN while raising the temperature to 23 to 300°C at a heating rate of 5°C/min. The TMA measurement was performed in the machine direction (MD) and the direction perpendicular thereto (TD) of the injection-molded article, and the CTE was determined from the measured values at 23 to 220°C.

Production Example 1

(Production of polyimide resin 1)

500 g of 2-(2-methoxyethoxy)ethanol (produced by Nippon Nyukazai Co., Ltd.) and 218.12 g (1.00 mol) of pyromellitic dianhydride (produced by Mitsubishi Gas Chemical Company, Inc.) were introduced in a 2 L separable flask equipped with a Dean-Stark apparatus, a Liebig condenser tube, a thermocouple, and a four-paddle blade. After creation of a nitrogen flow, the mixture was agitated at 150 rpm so as to become a homogeneous suspended solution. On the other hand, 49.79 g (0.35 mol) of 1,3-bis(aminomethyl)cyclohexane (produced by Mitsubishi Gas Chemical Company, Inc., cis/trans ratio = 7/3) and 93.77 g (0.65 mol) of 1,8-octamethylenediamine (produced by Kanto Chemical Co., Inc.) were dissolved in 250 g of 2-(2-methoxyethoxy)ethanol with a 500 mL beaker, thereby preparing a mixed diamine solution. The mixed diamine solution was added slowly using a plunger pump. Heat was generated due to the dropwise addition, but the internal temperature was adjusted to be within the range of 40 to 80°C. The dropwise addition of the mixed diamine solution was carried out in a nitrogen flow state over the whole period. The number of rotations of the agitation blade was set to 250 rpm. After the completion of the dropwise addition, 130 g of 2-(2-methoxyethoxy)ethanol and 1.284 g (0.010 mol) of n-octylamine (produced by Kanto Chemical Co., Inc.) as an end capping agent were added thereto, and the mixture was further agitated. At this stage, a pale yellow polyamic acid solution was obtained. Next, the agitation speed was set to 200 rpm, and the polyamic acid solution in the 2 L separable flask was then heated to 190°C. In this heating process, the deposition of a polyimide resin powder and dehydration associated with imidization were confirmed when the solution temperature is at 120 to 140°C. The solution was kept at 190°C for 30 minutes, then allowed to cool to room temperature, and filtered. The obtained polyimide resin powder was washed with 300 g of 2-(2-methoxyethoxy)ethanol and 300 g of methanol, filtered, and then dried in a dryer at 180°C for 10 hours to obtain 317 g of a powder of a crystalline thermoplastic polyimide resin 1 (hereinafter also simply referred to as "polyimide resin 1").

The measurement of the IR spectrum of polyimide resin 1 showed the characteristic absorption of an imide ring ν(C=O) observed at 1768 and 1697 ($cm^{-1}$). The logarithmic viscosity was 1.30 dL/g, Tm was 323°C, Tg was 184°C, Tc was 266°C, the heat of crystallization was 21.0 mJ/mg, the half-crystallization time was 20 seconds or less, and Mw was 55,000.

Table 1 shows the composition and evaluation results of the polyimide resin 1 of Production Example 1. The values expressed in mol% of the tetracarboxylic acid component and the diamine component in Table 1 are values calculated from the charged amount of each component in production of the polyimide resin.

Table 1

| | | Tetracarboxylic acid component (mol% in total tetracarboxylic acid component) | Diamine component (mol% in total diamine component) | | (1)/{(1)+(2)} (mol%) *1 | Tm (°C) | Tg (°C) | Tc (°C) | Exothermic amount of crystallization ΔHm (mJ/mg) | Half-crystallization time (sec) | Mw |
|---|---|---|---|---|---|---|---|---|---|---|---|
| | | PMDA | 1,3-BAC | ONMA | | | | | | | |
| Production Example 1 | Polyimide resin 1 | 100 | 35 | 65 | 35 | 323 | 184 | 266 | 21.0 | <20 | 55,000 |

*1: Content ratio (mol%) of the repeating structural unit of the formula (1) with respect to the total of the repeating structural unit of the formula (1) and the repeating structural unit of the formula (2) in the polyimide resin

The abbreviations in the table 1 are as follows.

- PMDA; pyromellitic dianhydride
- 1,3-BAC; 1,3-bis(aminomethyl)cyclohexane
- OMDA; 1,8-octamethylenediamine

Example 1 (production and evaluation of polyimide resin composition and molded article)

<Production of injection-molded article>

A powder of the polyimide resin 1 obtained in Production Example 1 and a powder of the amorphous resin (B 1) ("Sumika Excel 3600P" produced by Sumitomo Chemical Co., Ltd., intrinsic viscosity at 25°C: 0.307 dL/g, Mn: 8,600, Mw: 16,500, Tg: 222°C)) were dryblended in the proportion shown in Table 2, and then the mixture was melt-kneaded and extruded using a co-rotating twin-screw kneading extruder ("HK-25D", produced by Parker Corporation, screw diameter 25 mmΦ, LID = 41) at a barrel temperature of 370°C and a screw rotation speed of 150 rpm. The strands extruded from the extruder were air cooled, and then pelletized by a pelletizer ("Fan Cutter FC-Mini-4/N", produced by Hoshi Plastic Co., Ltd.). The obtained pellets were dried at 150°C for 12 hours, and then used for injection-molding.
The injection-molding was performed at a barrel temperature of 385°C, a mold temperature of 165°C, and a molding cycle of 60 seconds with an injection-molding machine ("ROBOSHOT α-S30iA", produced by FANUC Corporation), and the molded piece was cut to a predetermined size, thereby preparing a molded article to be used for measuring the water absorption rate and CTE.
Various evaluations were performed by the methods described above using the obtained injection-molded article. The results are shown in Table 2.

Examples 2 to 5 (production and evaluation of polyimide resin composition and molded article)

Injection-molded articles were produced and various evaluations were performed in the same manner as in Example 1, except that the powder of the polyimide resin 1 obtained in Production Example 1 and the amorphous resin (B) were used in the proportions shown in Table 2. The results are shown in Table 2. It is noted that a powder was used for the amorphous resin (B 1), and pellets were used for the amorphous resins (B2) and (B3).

Comparative Example 1

<Production of injection-molded article>

A powder of the polyimide resin 1 obtained in Production Example 1 was melt-kneaded and extruded using a Labo Plasto Mill (produced by Toyo Seiki Seisaku-Sho, Ltd.) at a barrel temperature of 360°C and a screw rotation speed of 150 rpm. The strands extruded from the extruder were air cooled, and then pelletized by a pelletizer ("Fan Cutter FC-Mini-4/N", produced by Hoshi Plastic Co., Ltd.). The obtained pellets were dried at 150°C for 12 hours, and then used for injection-molding.
The injection-molding was performed at a barrel temperature of 350°C, a mold temperature of 200°C, and a molding cycle of 50 seconds with an injection-molding machine ("ROBOSHOT α-S30iA", produced by FANUC Corporation), and the injection-molded piece was cut to a predetermined size, thereby preparing a molded article to be used for measuring the water absorption rate and CTE.
Various evaluations were performed by the methods described above using the obtained injection-molded article. The results are shown in Table 2.

Comparative Example 2

<Production of injection-molded article>

A powder of the amorphous resin (B1) ("Sumika Excel 3600P" produced by Sumitomo Chemical Co., Ltd.) was melt-kneaded and extruded using a Labo Plasto Mill (produced by Toyo Seiki Seisaku-Sho, Ltd.) at a barrel temperature of 360°C and a screw rotation speed of 150 rpm. The strands extruded from the extruder were air cooled, and then pelletized by a pelletizer ("Fan Cutter FC-Mini-4/N", produced by Hoshi Plastic Co., Ltd.). The obtained pellets were dried at 160°C for 6 hours, and then used for injection-molding.

The injection-molding was performed at a barrel temperature of 350°C, a mold temperature of 180°C, and a molding cycle of 60 seconds with an injection-molding machine ("ROBOSHOT α-S30iA", produced by FANUC Corporation), and the injection-molded piece was cut to a predetermined size, thereby preparing a molded article to be used for measuring the water absorption rate and CTE.
Various evaluations were performed by the methods described above using the obtained injection-molded article. The results are shown in Table 2.

Comparative Example 3

<Production of injection-molded article>

Pellets of the amorphous resin (B2) ("Ultrazone S2010" produced by BASF) were injection molded at a barrel temperature of 370°C, a mold temperature of 160°C, and a molding cycle of 60 seconds with an injection-molding machine ("ROBOSHOT α-S30iA", produced by FANUC Corporation), and the injection-molded piece was cut to a predetermined size, thereby preparing a molded article to be used for measuring the water absorption rate and CTE.
Various evaluations were performed by the methods described above using the obtained injection-molded article. The results are shown in Table 2.

Comparative Example 4

<Production of injection-molded article>

Pellets of the amorphous resin (B3) ("Ultrazone P3010" produced by BASF) were injection molded at a barrel temperature of 370°C, a mold temperature of 160°C, and a molding cycle of 60 seconds with an injection-molding machine ("ROBOSHOT α-S30iA", produced by FANUC Corporation), and the injection-molded piece was cut to a predetermined size, thereby preparing a molded article to be used for measuring the water absorption rate and CTE.
Various evaluations were performed by the methods described above using the obtained injection-molded article. The results are shown in Table 2.

Table 2

| | | | Comparative Example 1 | Example 1 | Comparative Example 2 | Example 2 | Comparative Example 3 | Example 3 | Example 4 | Example 5 | Comparative Example 4 |
|---|---|---|---|---|---|---|---|---|---|---|---|
| Resin compositional makeup | (A) Polyimide resin 1 | % by mass | 100 | 70 | | 70 | | 70 | 50 | 30 | |
| | (B1) 3600P | % by mass | | 30 | 100 | | | | | | |
| | (B2) 52010 | % by mass | | | | 30 | 100 | | | | |
| | (B3) P3010 | % by mass | | | | | | 30 | 50 | 70 | 100 |
| Mass ratio (A)/{(A)+(B)} | | - | 1.00 | 0.70 | 0 | 0.70 | 0 | 0.70 | 0.50 | 0.30 | 0 |

(continued)

| | | | Comparative Example 1 | Example 1 | Comparative Example 2 | Example 2 | Comparative Example 3 | Example 3 | Example 4 | Example 5 | Comparative Example 4 |
|---|---|---|---|---|---|---|---|---|---|---|---|
| Evaluation results | Glass transition temperature (Tg) | °C | 184 | 218 | 222 | 181 | 185 | 181 | 213 | 212 | 211 |
| | Crystallization temperature (Tc) | °C | 266 | 273 | - | 266 | - | 321 | 321 | 322 | - |
| | Exothermic amount of crystallization (ΔHm) | °C | 21.0 | 17.7 | - | 16.3 | - | 16.3 | 11.7 | 7.2 | - |
| | $\Delta Hm_0\times$(component (A) mass proportion) | - | - | 14.7 | - | 14.7 | - | 14.7 | 10.5 | 6.3 | - |
| | $[\Delta Hm-\{\Delta Hm_0\times$(component (A) mass proportion)$\}]/\Delta Hm\times100$ | - | - | 16.9 | - | 9.8 | - | 9.8 | 10.3 | 12.5 | - |
| | Water absorption rate | % | 0.13 | 0.18 | 0.49 | 0.14 | 0.25 | 0.16 | 0.17 | 0.21 | 0.31 |
| | CTE (MD) 23-220°C | ppm/°C | 81 | 33 | 48 | 31 | 517 | 31 | 41 | 30 | 39 |
| | CTE (TD) 23-220°C | ppm/°C | 81 | 53 | 62 | 55 | 742 | 60 | 42 | 57 | 57 |
| | CTE (MD+TD) | ppm/°C | 162 | 86 | 110 | 86 | 1259 | 91 | 83 | 87 | 96 |

The details of each component shown in Table 2 are as follows.

<Polyimide resin (A)>

(A1) Polyimide resin 1: Crystalline thermoplastic polyimide resin 1 obtained in Production Example 1

<Amorphous resin (B)>

(B1) 3600P: "Sumika Excel 3600P" produced by Sumitomo Chemical Co., Ltd., amorphous resin represented by formula (I-1a), R=Cl in formula (I-1a), intrinsic viscosity at 25°C: 0.307 dL /g, Mn: 8,600, Mw: 16,500, Tg: 222°C

(B2) S2010: "Ultrazone S2010" produced by BASF, amorphous resin represented by formula (I-2), intrinsic viscosity at 25°C: 0.305 dL/g

(B3) P3010: "Ultrazone P3010" produced by BASF, amorphous resin represented by formula (I-3c)

As shown in Table 2, the molded articles composed of the polyimide resin compositions of the present invention (Examples 1 to 5) have a lower coefficient of linear thermal expansion and excellent dimensional stability than the molded articles of Comparative Examples 1 to 4. Further, it can be seen that the water absorption rates are also low.

In addition, in Examples 1 to 5, the difference between the actual measured value of the exothermic amount of crystallization $\Delta$Hm and the value of "$\Delta Hm_0 \times$ mass proportion of component (A)" is within $\pm$30%, from which it can be inferred that the molded articles of Examples 1 to 5 have a microphase-separated structure.

Further, using the pellets obtained in Examples 2, 3, and 5, the dispersion state of the polyimide resin (A) and amorphous resin (B) in each pellet was confirmed by the following method.

Each pellet was cut as shown in Fig. 1 using a microtome ("EM UC 7" produced by LEICA MICROSYSTEMS) perpendicular to the machine direction (MD) of the pellet 1 (that is, so that a TD cross section was exposed).

After staining the cut section with ruthenium tetroxide for 30 minutes in the gas phase, the cut section was observed using a field emission scanning electron microscope (FE-SEM, "GeminiSEM500" produced by ZEISS) at an acceleration voltage of 1 kV and an observation magnification of 3000 times (Figs. 2 to 4). In each observation image, it was determined that the darkly colored portions were composed of the polyimide resin (A), which is easily dyed by the ruthenium tetroxide.

Fig. 2 is a micrograph of a pellet from Example 2 (mass ratio [(A)/(B2)] = 70/30), Fig. 3 is a micrograph of a pellet from Example 3 (mass ratio [(A)/(B3)] = 70/30), and Fig. 4 is a micrograph of a pellet from Example 5 (mass ratio [(A)/(B3)] = 30/70).

From Figs. 2 to 4, it can be seen that in the pellets obtained in Examples 2, 3, and 5, the polyimide resin (A) and the amorphous resin (B) form a sea-island structure.

Industrial Applicability

The polyimide resin composition and molded article of the present invention have a low coefficient of linear thermal expansion and excellent dimensional stability, and therefore are suitable for, for example, films, copper clad laminates and electrical and electronic members requiring a low coefficient of linear thermal expansion.

## Claims

**1.** A polyimide resin composition comprising a polyimide resin (A) and an amorphous resin (B), wherein the polyimide resin (A) comprises a repeating structural unit represented by the following formula (1) and a repeating structural unit represented by the following formula (2), a content ratio of the repeating structural unit of the formula (1) with respect to the total of the repeating structural unit of the formula (1) and the repeating structural unit of the formula (2) is 20 to 70 mol%, and the amorphous resin (B) comprises a repeating structural unit represented by the following formula (I),

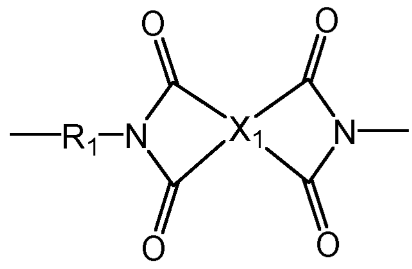

(1)

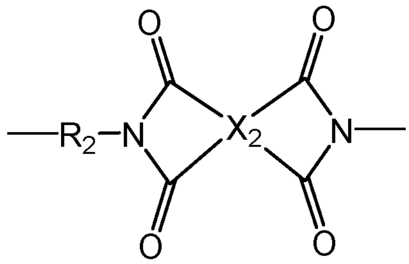

(2)

wherein $R_1$ represents a divalent group having from 6 to 22 carbon atoms containing at least one alicyclic hydrocarbon structure; $R_2$ represents a divalent chain aliphatic group having from 5 to 16 carbon atoms; and $X_1$ and $X_2$ each independently represent a tetravalent group having from 6 to 22 carbon atoms containing at least one aromatic ring, and

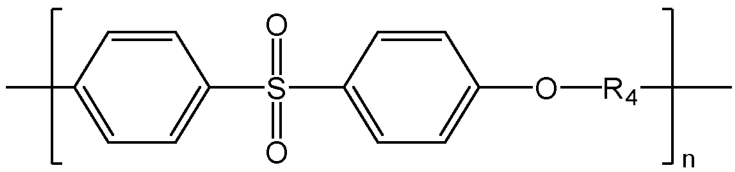

(I)

wherein $R_4$ represents a single bond or a divalent group having from 6 to 22 carbon atoms containing at least one aromatic ring; and n is the number of repeating structural units, and is a number exceeding 1.

**2.** The polyimide resin composition according to claim 1, wherein a molded article obtained by molding the polyimide resin composition has a microphase-separated structure.

**3.** The polyimide resin composition according to claim 1 or 2, wherein a molded article having a thickness of 4 mm obtained by molding the polyimide resin composition has a coefficient of linear thermal expansion of 60 ppm/°C or less as measured in a range of 23 to 220°C in accordance with JIS K7197:2012.

**4.** The polyimide resin composition according to any one of claims 1 to 3, wherein the component (B) is an amorphous resin comprising a repeating structural unit represented by any of the following formulae (I-1) to (I-3):

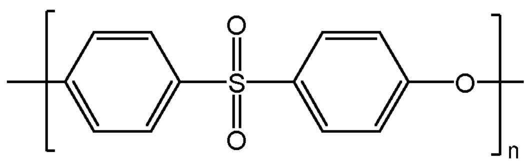

(I-1)

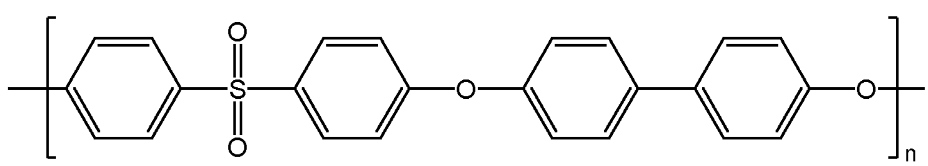

(I-2)

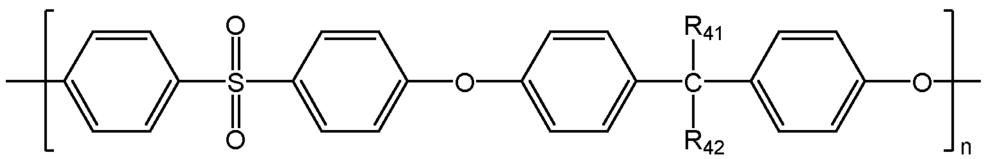

(I-3)

wherein $R_{41}$ and $R_{42}$ each independently represent a hydrogen atom or an alkyl group having from 1 to 4 carbon

atoms; and n is the number of repeating structural units, and is a number exceeding 1.

**5.** The polyimide resin composition according to any one of claims 1 to 4, wherein a mass ratio [(A)/{(A)+(B)}] of the component (A) with respect to a total mass of the component (A) and the component (B) in the polyimide resin composition is 0.01 or more and 0.99 or less.

**6.** The polyimide resin composition according to claim 4 or 5, wherein the component (B) is an amorphous resin (B1) comprising a repeating structural unit represented by the formula(I-1), and a mass ratio [(A)/{(A)+(B1)}] of the component (A) with respect to a total mass of the component (A) and component (B1) in the polyimide resin composition is more than 0.65 and 0.99 or less.

**7.** A molded article comprising the polyimide resin composition according to any one of claims 1 to 6.

[Fig. 1]

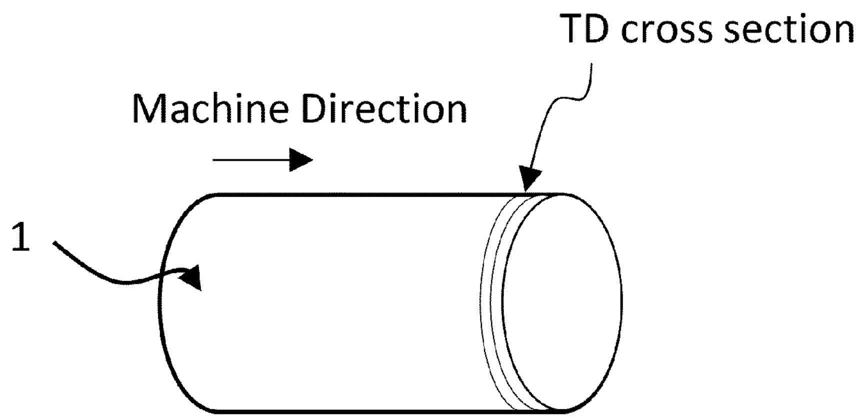


[Fig. 2]

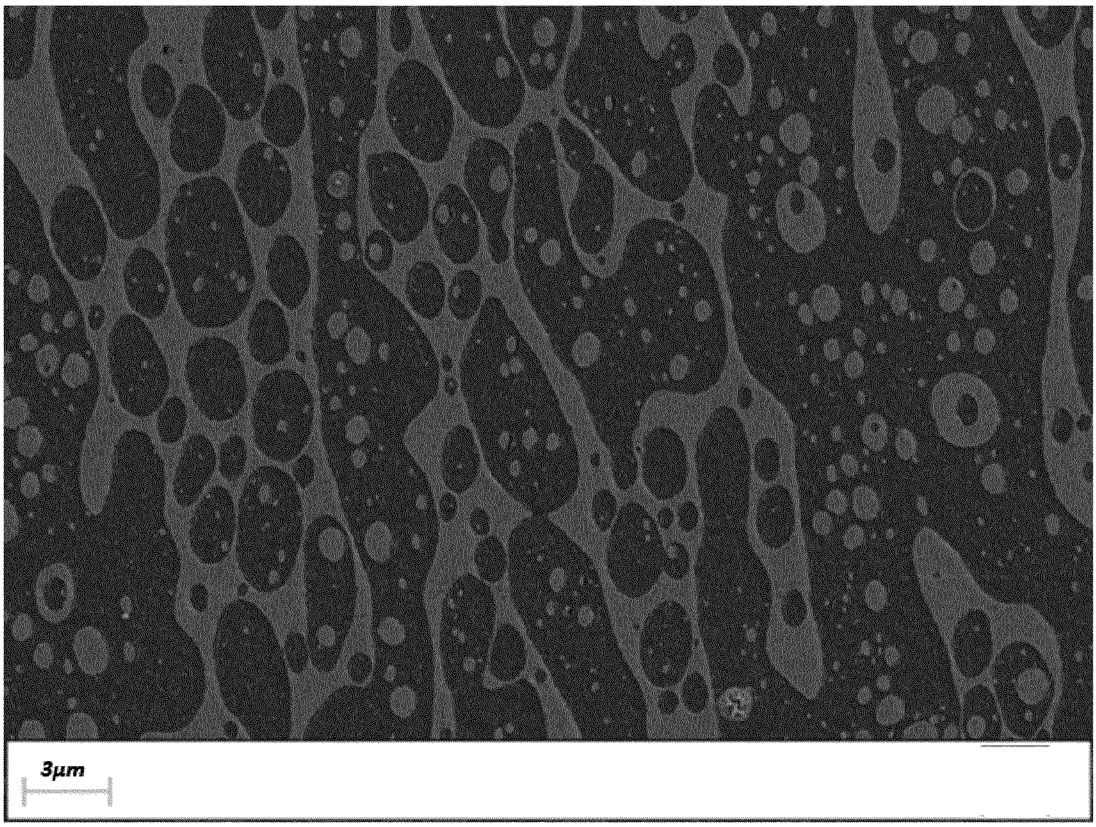

[Fig. 3]

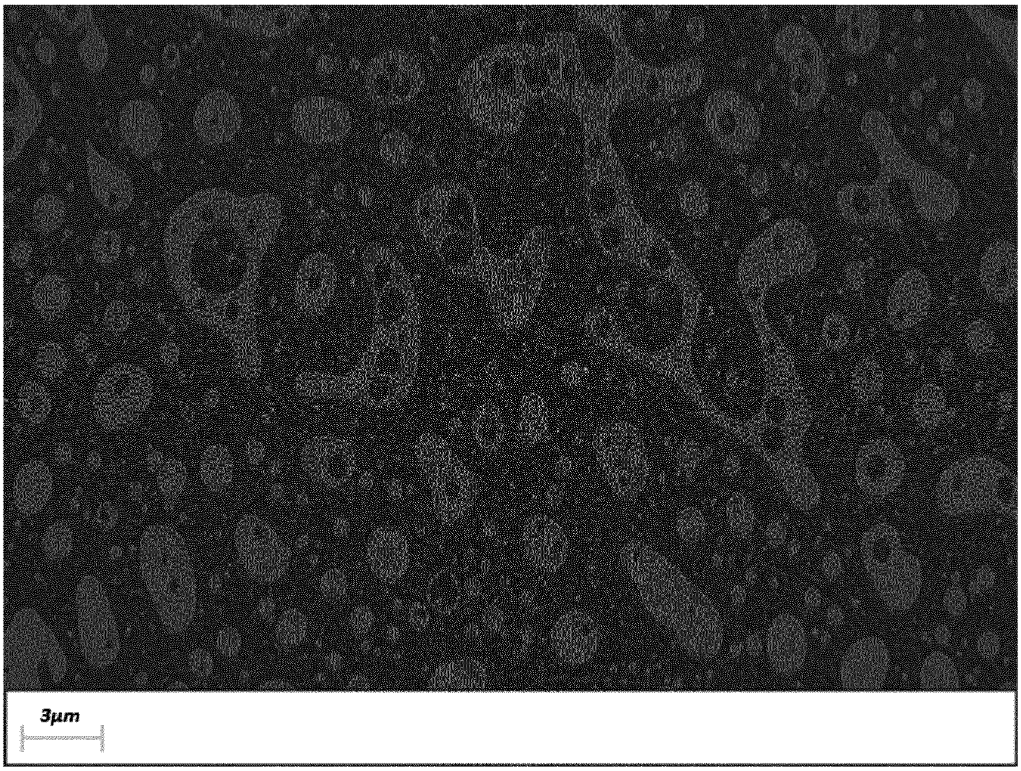


[Fig. 4]

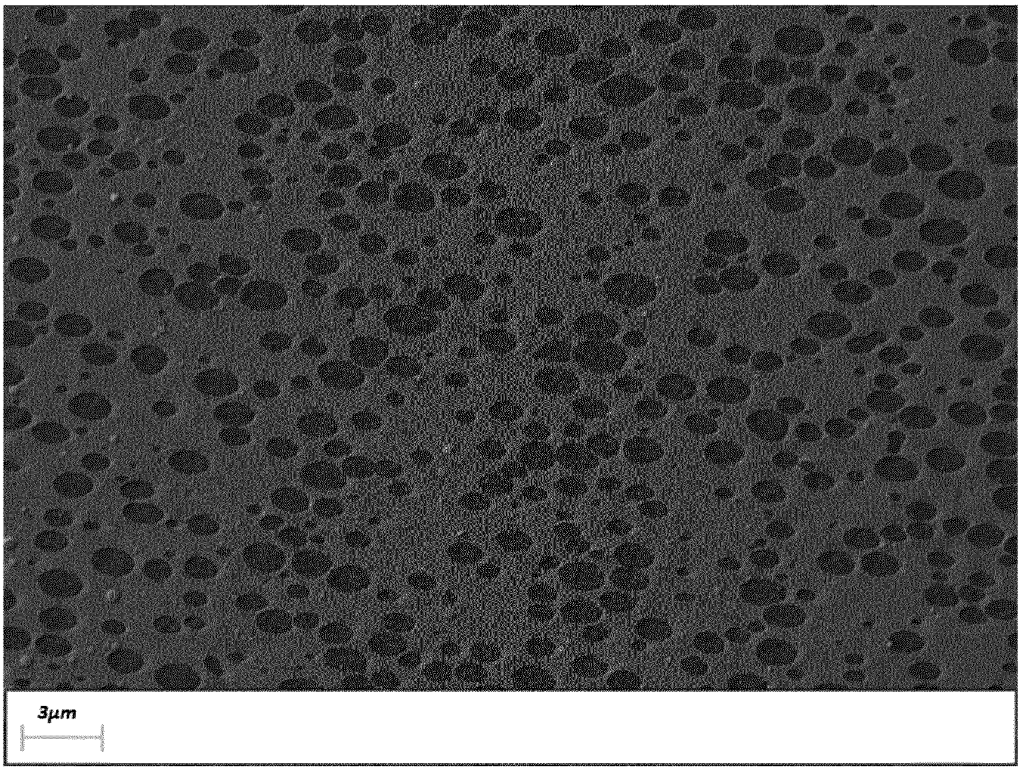

**INTERNATIONAL SEARCH REPORT**

International application No.
**PCT/JP2022/031146**

**A. CLASSIFICATION OF SUBJECT MATTER**

***C08L 79/08***(2006.01)i; ***C08G 73/10***(2006.01)i; ***C08L 81/06***(2006.01)i
FI: C08L79/08 B; C08L81/06; C08G73/10

According to International Patent Classification (IPC) or to both national classification and IPC

**B. FIELDS SEARCHED**

Minimum documentation searched (classification system followed by classification symbols)

C08L79/08; C08G73/10; C08L81/06

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2016/147996 A1 (MITSUBISHI GAS CHEMICAL COMPANY, INC) 22 September 2016 (2016-09-22) claims, paragraphs [0081], [0082], [0113]-[0151], examples | 1-7 |
| A | JP 2017-132892 A (SUMITOMO ELECTRIC WINTEC INC) 03 August 2017 (2017-08-03) claims, examples, entire text | 1-7 |
| A | JP 10-251515 A (NITTO DENKO CORP) 22 September 1998 (1998-09-22) claims, examples, entire text | 1-7 |
| A | WO 2021/131501 A1 (MITSUBISHI GAS CHEMICAL COMPANY, INC) 01 July 2021 (2021-07-01) claims, examples, entire text | 1-7 |
| A | WO 2019/220969 A1 (MITSUBISHI GAS CHEMICAL COMPANY, INC) 21 November 2019 (2019-11-21) claims, examples, entire text | 1-7 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 October 2022** | **18 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/031146**

**C. DOCUMENTS CONSIDERED TO BE RELEVANT**

| Category* | Citation of document, with indication, where appropriate, of the relevant passages | Relevant to claim No. |
|---|---|---|
| P, X | WO 2022/065063 A1 (MITSUBISHI GAS CHEMICAL COMPANY, INC) 31 March 2022 (2022-03-31) claims, examples, entire text | 1-7 |

Form PCT/ISA/210 (second sheet) (January 2015)

**INTERNATIONAL SEARCH REPORT**
**Information on patent family members**

International application No.
**PCT/JP2022/031146**

| Patent document cited in search report | Publication date (day/month/year) | Patent family member(s) | Publication date (day/month/year) |
|---|---|---|---|
| WO 2016/147996 A1 | 22 September 2016 | US 2017/0130003 A1 claims, paragraphs [0145], [0146], [0199]-[0261], examples | |
| | | EP 3272785 A1 | |
| | | KR 10-2017-0002690 A | |
| | | CN 106536598 A | |
| | | TW 201638151 A | |
| JP 2017-132892 A | 03 August 2017 | (Family: none) | |
| JP 10-251515 A | 22 September 1998 | (Family: none) | |
| WO 2021/131501 A1 | 01 July 2021 | TW 202132465 A | |
| WO 2019/220969 A1 | 21 November 2019 | US 2021/0230370 A1 claims, examples | |
| | | EP 3795640 A1 | |
| | | CN 112105695 A | |
| | | KR 10-2021-0013020 A | |
| | | TW 201946972 A | |
| WO 2022/065063 A1 | 31 March 2022 | JP 7040692 B1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005028524 A
- WO 2013118704 A
- WO 2016147996 A